# EUROPEAN PATENT APPLICATION

(11) **EP 3 995 759 A1**
(43) Date of publication of application: **11.05.2022**
(21) Application number: 20834822.7
(22) Date of filing: 29.06.2020
(51) Int. Cl.: F25B 21/02, B60H 1/00

(54) **PELTIER AIR-CONDITIONING DEVICE**

(30) Priority: 04.07.2019 ES 201931129 U
(71) Applicant: Danut Telechi, Ioan, 43550 Ulldecona, Tarragona (ES)
(72) Inventor: Danut Telechi, Ioan, 43550 Ulldecona, Tarragona (ES)
(74) Representative: Espiell Gomez, Ignacio
(86) International application number: PCT/ES2020/070413
(87) International publication number: WO 2021/001585

(57) **Abstract**

The invention relates to a Peltier air-conditioning device comprising an evaporator (2) formed by: at least one reservoir (20) that includes a refrigerant liquid; at least two Peltier cells (3) disposed such that both are in direct contact with the evaporator (2), being suitably connected, by means of corresponding wiring (4), to appropriate control means to switch on the device and to change polarity; and at least one dissipator tube (5) disposed such that it is in direct contact with the Peltier cells (3). Preferably, the air-conditioning device comprises, as control means for switching on/off the passage of electric current through the Peltier cells (3) and changing the polarity of same, electronic control means implemented in computer hardware with specific software designed for such purpose.

## Description

### OBJECT OF THE INVENTION

The invention, as stated in the title of the present specification, relates to a Peltier air-conditioning device, for example for vehicles, cold-store chambers, industrial refrigerators, coolers or air conditioning that contributes advantages and features to the function intended, which are described in detail further on.

The object of the present invention relates to a Peltier air-conditioning device which comprises, forming a compact assembly, an evaporator through which a refrigerant liquid circulates, two Peltier cells in contact with the evaporator and a dissipator tube in contact with the cells such that, through air circulation and control means, it allows heat or cold to be provided within the area to be cooled in an advantageous manner compared to existing air-conditioning systems, particularly due to the reduction of the space that it occupies and of the energy that it consumes, and because it represents a completely ecological and environmentally-friendly system as it does not use any type of gas.

### FIELD OF APPLICATION OF THE INVENTION

The field of application of the present invention is comprised within the sector of the industry dedicated to the manufacture of air-conditioning systems, specifically encompassing those applicable to be installed inside automotive vehicles, cold-store chambers, industrial refrigerators, coolers or air conditioners.

### BACKGROUND OF THE INVENTION

Most vehicles today have air-conditioning, heating and climate-control systems installed therein to regulate regular the temperature in the passenger compartment thereof. However, this equipment usually comprises complex liquid circulation systems, since many of the elements comprised therein do not fit inside the passenger compartment, where the air outlet gratings are installed, which in turn causes efficiency losses, in turn causing a higher energy consumption, in addition to the loss of space that could be used for other purposes.

The objective of the present invention is, therefore, to provide on the market an improved cold/hot air-conditioning device which, by utilising Peltier effect technology, allows most of the drawbacks of current systems to be avoided, thereby achieving a device that is much smaller, so as to be able to place it directly in the passenger compartment, for example, under the dashboard, and much more effective in terms of energy savings.

The air-conditioning device can also be used in other areas, such as in cold-store chambers, industrial refrigerators, coolers or air conditioners.

Furthermore, and as a reference to the current state of the art, it should be noted that at least the applicant is unaware of the existence of any other air-conditioning device which presents technical and constitutive features that are the same or similar to those presented by that which is claimed herein.

### DESCRIPTION OF THE INVENTION

The Peltier air-conditioning device proposed by the invention is configured as an optimal solution to the aforementioned objective, the characterising details that distinguish it being conveniently included in the final claims that accompany this description.

Namely, as mentioned above, the invention proposes an air-conditioning device which essentially comprises, forming a compact assembly, the following elements:
- an evaporator formed by a reservoir with a refrigerant liquid, which can be static or provided with a circulation mechanism so as to move the liquid inside said reservoir;
- at least two Peltier cells disposed such that both are in direct contact with the evaporator; and
- at least one dissipator tube disposed such that it is in direct contact with the Peltier cells.

With it, and through the corresponding electrical connection and control means, according to the polarity of the electricity supplied to the Peltier cells, heat is generated on either side of the cell and cold is generated on the opposite side. The side of the Peltier cell in contact with the evaporator transmits the heat or cold to the refrigerant liquid, which in turn transmits the heat or cold to the air that goes through the evaporator and is injected into the space to be cooled. The opposite side of the Peltier cell in contact with the dissipator tube heats or cools the wall of the tube which expels the heat or the cold dissipated out by means of the circulation of the air through said tube. This configuration is particularly appealing for use in vehicles where space and weight are two very relevant aspects.

The main advantage of this device is that it is compact and can be situated below the dashboard of a vehicle which is where the evaporator is generally situated.

As discussed in the sections above, in Peltier air-conditioning devices existing today there are many more elements that cannot be located under the dashboard and therefore require the refrigerant liquid to be conveyed along the vehicle, whereby generating efficiency losses.

The device optionally has control means implemented in a computer system, for example, of the electronic control unit itself of the vehicle, which can be managed by means of software designed for such purpose to control the switching on/off and the polarity of the Peltier cells.

Advantageously, as a result of said software, certain Peltier cells can be disconnected, for example, when the space to be air conditioned is already air conditioned and the desired temperature is to simply be maintained, with the subsequent energy savings.

Said (switched off) Peltier cells can also advantageously be used to generate electricity and to store said electricity in the battery.

Air can optionally be forced to pass through the dissipation tubes by means of including a fan in the device, which fan can be installed so that it works by either injecting air or else absorbing air, as appropriate in each case.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:

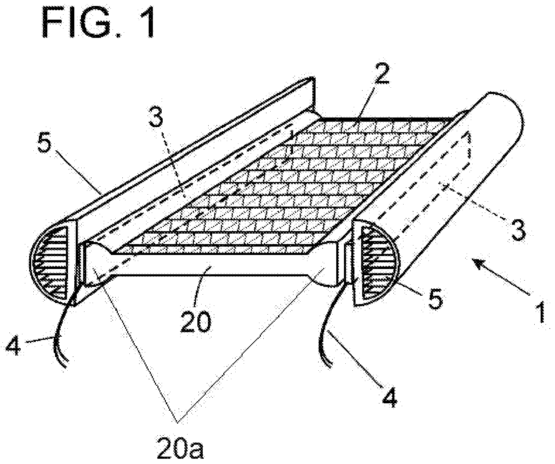

The only figure, Figure 1, shows a schematic perspective view of an embodiment of the Peltier air-conditioning device, object of the invention, namely an example with two dissipators coupled to both sides of the evaporator, placing the Peltier cells between said dissipators, where the main parts and elements comprised therein as well as the configuration and arrangement thereof can be seen.

### PREFERRED EMBODIMENT OF THE INVENTION

In view of the described figure, and in accordance with the adopted numbering, one may observe therein a non-limiting exemplary embodiment of the Peltier air-conditioning device of the invention, comprising what is described in detail below.

Thus, as observed in said figure, the device (1) of the invention is formed by a compact assembly which essentially comprises:
- an evaporator (2) formed by at least one reservoir (20) that includes a refrigerant liquid;
- at least two Peltier cells (3) disposed such that both are in direct contact with the evaporator (2), being suitably connected, by means of corresponding wiring (4), to control means (not depicted) to switch on the device and to change polarity; and
- at least one dissipator tube (5) disposed such that it is in direct contact with the Peltier cells (3),

The device comprises generating, according to the polarity of the electric current supplied to the Peltier cells (3), heat or cold on the cell side that is in contact with the evaporator (2), and said heat or cold is transmitted to the refrigerant liquid therein, which in turn transmits the heat or cold to the air that goes through said evaporator (2), being injected into the space to be air conditioned, and the opposite effect is generated on the opposite side of the Peltier cells (3) in contact with the dissipator tube (5), cooling or heating the wall of said tube (5) which is expelled out of the space to be air conditioned by means of the circulation of air therethrough.

In one embodiment, the refrigerant liquid in the reservoir (20) of the evaporator (2) is static and does not circulate. In an alternative embodiment, the refrigerant liquid circulates inside the reservoir (20) with the help of a circulation mechanism, for example an impulse pump (not depicted).

In the embodiment, as depicted in Figure 1, the device (1) comprises a central evaporator (2) formed by a single reservoir (20) for refrigerant liquid having a considerably planar rectangular configuration, with the two Peltier cells (3) being included attached to the respective sides thereof, on opposite sides (20a), on which cells there are in turn attached respective dissipator tubes (5), forming a small-sized, compact assembly suitable for advantageously being coupled under the dashboard of a vehicle. In said Figure 1, this embodiment has been depicted in a very schematic manner, including only the essential elements comprised in the device.

In any case, the device (1) optionally further comprises a fan (not depicted) coupled to the dissipator tube or tubes (5) so as to force the passage of air therethrough, which fan can be installed as a mechanism to inject air into the respective tube or to absorb same.

The device (1) optionally has, as control means for switching on/off the passage of electric current through the Peltier cells (3) and changing polarity of same, electronic control means implemented in computer hardware, for example of the electronic control unit itself of the vehicle, with specific software designed for such purpose.

Having sufficiently described the nature of the present invention, as well as the ways of implementing it, it is not considered necessary to expand its explanation for any person skilled in the state of the art to understand its scope and the advantages which derive from it.

## Claims

1. A Peltier air-conditioning device, **characterised by** comprising:
- an evaporator (2) formed by at least one reservoir (20) that includes a refrigerant liquid;
- at least two Peltier cells (3) disposed such that both are in direct contact with the evaporator (2), being suitably connected, by means of corresponding wiring (4), to appropriate control means to switch on the device and to change polarity; and
- at least one dissipator tube (5) disposed such that it is in direct contact with the Peltier cells (3).

2. The Peltier air-conditioning device according to claim 1, **characterised in that** the refrigerant liquid in the reservoir (20) of the evaporator (2) is static and non-circulating.

3. The Peltier air-conditioning device according to claim 1, **characterised in that** it comprises a circulation mechanism, for example an impulse pump, which causes the refrigerant liquid to circulate inside the reservoir (20).

4. The Peltier air-conditioning device according to claim 1, **characterised in that** the central evaporator (2) is formed by a single reservoir (20) for refrigerant liquid having a considerably planar rectangular configuration, with the two Peltier cells (3) being included attached to the respective sides thereof, on opposite sides (20a), on which cells there are in turn attached respective dissipator tubes (5).

5. The Peltier air-conditioning device according to any of claims 1 to 4, **characterised in that** it further comprises a fan coupled to the dissipator tube or tubes (5) so as to force the passage of air therethrough.

6. The Peltier air-conditioning device according to claim 5, **characterised in that** the fan (6) injects air into the tube (5).

7. The Peltier air-conditioning device according to claim 5 or 6, **characterised in that** the fan absorbs air from inside the tube (5).

8. The Peltier air-conditioning device according to any of claims 1 to 7, **characterised in that** it comprises, as control means for switching on/off the passage of electric current through the Peltier cells (3) and changing polarity of same, electronic control means implemented in computer hardware with specific software designed for such purpose.
